# EUROPEAN PATENT APPLICATION

(11) **EP 4 675 219 A1**
(43) Date of publication of application: **07.01.2026**
(21) Application number: 25182609.5
(22) Date of filing: 13.06.2025
(51) Int. Cl.: G01B 3/18, G01B 5/06

(54) **AUTOMATIC TEST SPECIMEN MEASUREMENT APPARATUS AND MATERIAL TESTING SYSTEMS HAVING AUTOMATIC TEST SPECIMEN MEASUREMENT APPARATUS**

(30) Priority: 03.07.2024 US 202463667387 P; 24.04.2025 US 202519188226
(71) Applicant: Illinois Tool Works Inc., Glenview IL 60025 (US)
(72) Inventor: CARNAZZA, Daniel James, Glenview, 60025 (US); FRANCIS, Hekmat, Glenview, 60025 (US)
(74) Representative: HGF

(57) **Abstract**

Disclosed example test specimen measurement apparatus include: a first measurement assembly configured to measure a first specimen dimension in a first direction, the first measurement assembly comprising: a first anvil oriented along the first direction; a first micrometer oriented along the first direction and configured to output a first measurement; a first actuator configured to actuate the first micrometer with respect to the first anvil; and a second actuator configured to actuate the first micrometer and the first anvil simultaneously along the first direction; and a second measurement assembly configured to measure a second specimen dimension in a second direction, the second measurement assembly comprising: a second anvil oriented along the second direction; a second micrometer oriented along the second dimension and configured to output a second measurement; and a third actuator configured to actuate the second micrometer with respect to the second anvil.

## Description

### RELATED APPLICATIONS

The present application claims the benefit of U.S. Provisional Patent Application Serial No. 63/667,387, filed July 3, 2024, entitled "AUTOMATIC TEST SPECIMEN MEASUREMENT APPARATUS AND MATERIAL TESTING SYSTEMS HAVING AUTOMATIC TEST SPECIMEN MEASUREMENT APPARATUS." The entirety of U.S. Provisional Patent Application Serial No. 63/667,387 is expressly incorporated herein by reference.

### TECHNICAL FIELD

The present disclosure generally relates to material testing systems and, more particularly, to automatic test specimen measurement apparatus and material testing systems having automatic test specimen measurement apparatus.

### BACKGROUND

Material testing machines are used to test the properties (e.g., tensile/compressive strength) of various material specimens. The particular method of testing (a.k.a. test method) may vary from material specimen to material specimen. A computing device in communication with the material testing machine may guide a user through a workflow to setup, execute, and analyze the results of each test method.

Some material testing systems utilize automation to manipulate test specimens, which may include moving test specimens to different apparatus for measurement and testing and/or controlling the measurement and/or testing apparatus to perform one or more measurement and/or testing functions.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to automatic test specimen measurement apparatus and material testing systems having automatic test specimen measurement apparatus, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example automated material testing system, in accordance with aspects of this disclosure.
FIG. 2 is a block diagram of an example implementation of portions of the automated material testing system of FIG. 1.
FIG. 3 is a block diagram of an example implementation of the test specimen measurement apparatus of FIG. 1.
FIGS. 4A-4C illustrate views of an example implementation of the thickness anvil and/or the width anvil of FIG. 3.
FIG. 5A illustrates a first example test specimen positioned against the example thickness and width anvils for measurement of the dimensions of the test specimen.
FIG. 5B illustrates a second example test specimen positioned against the example thickness and width anvils for measurement of the dimensions of the test specimen.
FIGS. 6A-6D illustrates an example sequence of an automatic test specimen measurement involving the test specimen measurement apparatus of FIG. 3 and the robotic manipulator of FIG. 1.
FIGS. 7A-7B illustrates an example sequence of performing a zero-check on test specimen measurement apparatus of FIG. 3.
FIG. 8 is a flowchart representative of example machine readable instructions which may be performed by the robot controller and/or processing circuitry of FIGS. 1 and/or 2 to perform an automated test measurement using the test specimen measurement apparatus of FIG. 3.
FIG. 9 is a flowchart representative of example machine readable instructions which may be performed by the robot controller and/or processing circuitry of FIGS. 1 and/or 2 to perform an automated test measurement using the test specimen measurement apparatus of FIG. 3.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

According to aspects of the disclosure, disclosed example test specimen measurement apparatus include: a first measurement assembly configured to measure a first specimen dimension in a first direction, the first measurement assembly including: a first anvil oriented along the first direction; a first probe oriented along the first direction and configured to move along the first direction toward the first anvil; a first micrometer configured to output a first measurement based on a distance between the first probe and the first anvil; a first actuator configured to actuate the first micrometer with respect to the first anvil; and a second actuator configured to actuate the first micrometer and the first anvil simultaneously along the first direction; and a second measurement assembly configured to measure a second specimen dimension in a second direction, the second measurement assembly including: a second anvil oriented along the second direction; a second probe oriented along the second dimension and configured to move along the second direction toward the second anvil; a second micrometer configured to output a second measurement based on a distance between the second micrometer and the second anvil; and a third actuator configured to actuate the second micrometer with respect to the second anvil.

In some test specimen measurement apparatus, the first automatic measurement assembly includes: a first rail configured to convey the first micrometer along the first direction; and a second rail configured to simultaneously convey the first micrometer and the first anvil along the first direction. In some example test specimen measurement apparatus, the second automatic measurement assembly includes a third rail configured to convey the second micrometer along the second direction. Some example test specimen measurement apparatus further include a fourth actuator configured to actuate the second micrometer and the second anvil simultaneously along the second direction to a first actuator position and a second actuator position. Some example test specimen measurement apparatus further include a fifth actuator configured to actuate the second micrometer and the second anvil simultaneously along the second direction to a third actuator position from the second actuator position, the third actuator position configured to move at least one of second micrometer or the second anvil out of a path between the first micrometer and the first anvil.

Some example test specimen measurement apparatus further include a base having an aperture through which the specimen extends, the first automatic measurement assembly and the second automatic measurement assembly being coupled to the base. In some test specimen measurement apparatus, at least one of the first actuator, the second actuator, or the third actuator includes an electric actuator. In some test specimen measurement apparatus, at least one of the first actuator, the second actuator, or the third actuator includes a pneumatic actuator.

Disclosed example automatic test specimen measurement systems include: a first measurement assembly configured to measure a first specimen dimension in a first direction, the first measurement assembly include: a first anvil oriented along the first direction; a first micrometer oriented along the first direction, configured to move along the first direction toward the first anvil, and configured to output a first measurement based on a distance between the first micrometer and the first anvil; a first actuator configured to actuate the first micrometer with respect to the first anvil; and a second actuator configured to actuate the first micrometer and the first anvil simultaneously along the first direction; a second measurement assembly configured to measure a second specimen dimension in a second direction, the second measurement assembly including: a second anvil oriented along the second direction; a second micrometer oriented along the second dimension, configured to move along the second direction toward the second anvil, and configured to output a second measurement based on a distance between the second micrometer and the second anvil; and a third actuator configured to actuate the second micrometer with respect to the second anvil; and control circuitry configured to: control the second actuator to position the first micrometer and the first anvil; control the first actuator to actuate the first micrometer to contact a specimen; determine a first measurement of a first dimension of the specimen based on a signal from the first micrometer; control the second actuator to actuate the second micrometer to contact the specimen; and determine a second measurement of a second dimension of the specimen based on a signal from the second micrometer.

In some example automatic test specimen measurement systems, the first automatic measurement assembly includes: a first rail configured to convey the first micrometer along the first direction; and a second rail configured to simultaneously convey the first micrometer and the first anvil along the first direction. In some example automatic test specimen measurement systems, the second automatic measurement assembly includes: a third rail configured to convey the second micrometer along the second direction.

Some example automatic test specimen measurement systems further include a robotic manipulator configured to position the specimen at a predetermined position with respect to the first anvil and the second anvil. In some example automatic test specimen measurement systems, the predetermined position places the specimen in contact with both the first anvil and the second anvil.

In some example automatic test specimen measurement systems, the predetermined position is based on one or more nominal dimensions of the specimen. In some example automatic test specimen measurement systems, the control circuitry is configured to control the second actuator to position the first micrometer and the first anvil based on the one or more nominal dimensions of the specimen. Some example automatic test specimen measurement systems further include a fourth actuator configured to actuate the second micrometer and the second anvil simultaneously along the second direction to a first actuator position and a second actuator position, wherein the control circuitry is configured to control the fourth actuator to position the second micrometer and the second anvil based on the one or more nominal dimensions of the specimen.

In some example automatic test specimen measurement systems, the robotic manipulator is further configured to, after determination of the first and second measurements of the first and second dimensions of the specimen, move the specimen to a second predetermined position, and the control circuitry is configured to: control the first actuator to actuate the first micrometer to contact the specimen; determine a third measurement of the first dimension of the specimen based on a signal from the first micrometer; control the second actuator to actuate the second micrometer to contact the specimen; and determine a fourth measurement of the second dimension of the specimen based on a signal from the second micrometer. In some example automatic test specimen measurement systems, the control circuitry is configured to: determine a thickness of the specimen based on the first and third measurements; determine a width of the specimen based on the second and fourth measurements.

In some example automatic test specimen measurement systems, the predetermined position is based on an identifier of the specimen. Some example automatic test specimen measurement systems further include a material testing system configured to measure a physical property of the specimen, and calculate a physical characteristic of the specimen based on the first measurement, the second measurement, and the measured physical property of the specimen.

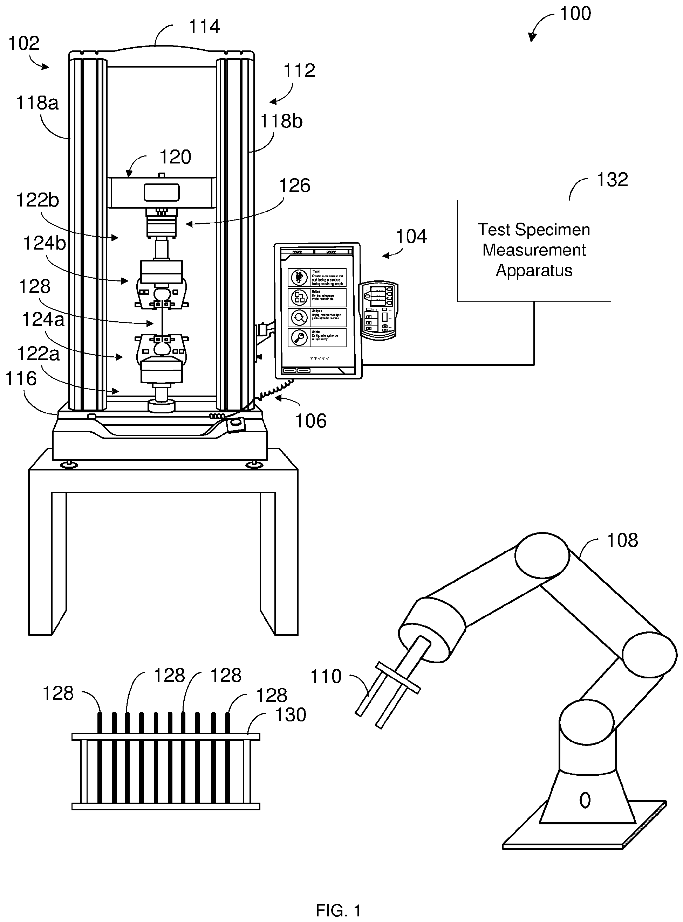

FIG. 1 shows an example material testing system 100. As shown, the material testing system 100 includes a material testing machine 102 (also known as a universal testing machine), and a computing system 104 connected to the material testing machine 102 (e.g., wirelessly, via a cable 106).

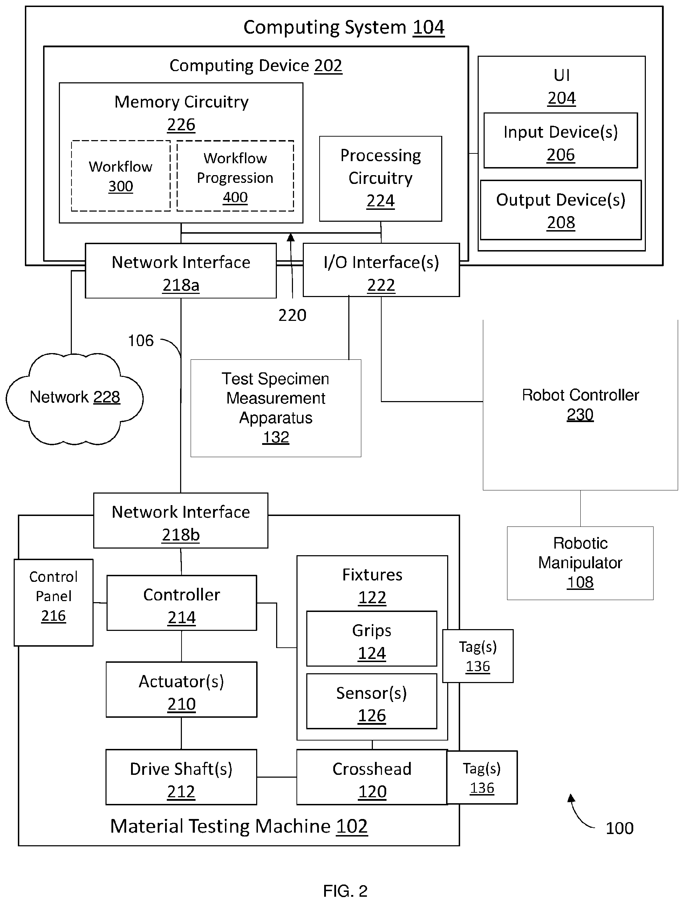

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members, and/or the moveable crosshead 120 may be positioned on a lower portion of the frame 112 instead of the upper portion.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124. The grips 124 may be used to perform tension testing, rotational or torsion testing, extensometry, and/or any other test and/or measurement that may be performed using the grips 124. In other examples, the fixtures 122 may include compression fixtures and/or any other general and/or specialized fixture types.

In the example of FIG. 1, the grips 124 are holding a test specimen 128. While shown as a strip of material, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 104 to conduct a test method. In some examples, the computing system 104 may use data imported from one or more data importation device(s) to conduct the test method, and/or analyze results of the test method. Example data importation devices may include scanners (e.g., 2D and/or 3D barcode scanners), tag readers (e.g., RFID readers), digital calipers or micrometers, cameras, and/or any other type of data importation device.

The example material testing machine 102 may be configured as part of an automated testing system, which further includes a robotic manipulator 108. The robotic manipulator 108 may be programmed or otherwise controlled to manipulate specimens with little or no operator intervention. For example, the robotic manipulator 108 includes an end effector 110, which is capable of grasping a specimen 128 from a rack 130 of specimens and placing the grasped specimen 128 in a position in which the specimen 128 can be secured via the fixtures 122 (e.g., the grips 124).

Prior to placing the grasped specimen 128 in the frame 112, the example robotic manipulator 108 may place the specimen 128 into a test specimen measurement apparatus 132 for measurement of one or more dimensions of the specimen 128. As disclosed in more detail below, the example test specimen measurement apparatus 132 automatically measures the dimensions of the specimen 128 and outputs the dimension measurements to the computing system 104 (e.g., via a cable, wirelessly, etc.). In other examples, the test specimen measurement apparatus 132 may automatically measure the dimensions and output the measured dimensions for use by the operator.

FIG. 2 is a block diagram of an example implementation of portions of the automated material testing system 100 of FIG. 1.

In the example of FIG. 2, the computing system 104 includes a computing device 202 and a user interface (UI) 204 interconnected with one another. As shown, the UI 204 may include one or more input devices 206 configured to receive inputs from a user, and one or more output devices 208 configured to provide outputs to the user. In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing workflow 300 configured to guide a user through setup, execution, and/or analysis of a test method conducted by the material testing machine 102.

The example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 104) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 104) to appropriate (e.g., electrical) signals that may be delivered to the grips 124, to thereby control (e.g., grip or release) operation of the grips 124. In some examples, the controller 214 may be configured to translate commands, control inputs, and/or test parameters (e.g., received from the computing system 104) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 104.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine to the computing system 104 (e.g., wirelessly and/or through cable 106). In some examples, the controller 214 may receive information (e.g., commands) from the computing device 202 through the network interface 218b, and/or send information (e.g., measurement data from sensor(s) 126) to the computing device 202 through the network interface 218b.

The example computing device 202 includes network interfaces 218a. As shown, one network interface 218a is in communication with the network interface 218b of the material testing machine 102 through cable 106. As shown, the computing device 202 further includes a network interface 218a in communication with a network 228 (e.g., the Internet). In some examples, the computing device 202 may be in communication with other computing systems 104 and/or material testing machines 102 through the network interface(s) 218a. As shown, the network interface 218b is electrically connected to a common electrical bus 220 of the computing device 202.

The computing device 202 also includes one or more input/output (I/O) interfaces 222 connected to the common electrical bus 220. In some examples, the one or more I/O interfaces 222 may comprise one or more universal serial bus (USB) ports, Thunderbolt ports, FireWire (IEEE 1394) ports, and/or any other type of serial and/or parallel data port. In some examples, the one or more I/O interfaces 222 may be configured for wireless (rather than wired) connection. As shown, the I/O interface(s) 222 are connected to the test specimen measurement apparatus 132 (e.g., via a wired and/or wireless connection).

The computing device 202 further includes processing circuitry 224 connected to the common electrical bus 220. In some examples, the processing circuitry 224 may comprise one or more processors. In some examples, the processing circuitry 224 is configured to process information received from the UI 204, data importation device(s) 108, and/or material testing machine 102. In some examples, the processing circuitry 224 is configured to transmit (e.g., via network interface(s) 218a) commands and/or test parameters to the material testing machine 102. In some examples, the processing circuitry 224 is configured to output information to an operator through the UI 204. In some examples, the computing device 202 is configured to execute machine readable instructions stored in memory circuitry 226.

The example computing device 202 further includes memory circuitry 226 connected to the common electrical bus 220. The memory circuitry 226 stores test processes (e.g., material testing workflows), historical test data, and/or other data. Stored processes may include non-transitory machine-readable instructions. In some examples, the computing device 202 is configured to interface with the controller 214 of the material testing machine 102 to execute test methods or other processes, and/or to receive, process, and/or store test data during the material testing processes.

In some examples, the UI 204 is configured to show (and/or otherwise output) one or more display states of a graphical user interface (GUI), such as during execution of a material testing workflow.

As illustrated in FIG. 2, the example test specimen measurement apparatus 132 is coupled to the computing system 104 via the I/O interface 222. A robot controller 230 is also coupled to the computing system 104 via the I/O interface 222. The example robot controller 230 may exchange commands and/or data with the computing system 104, and control multiple actuators of the robotic manipulator 108 (e.g., joints, segments, effectors, etc.) to perform commanded tasks.

In the arrangement of FIG. 2, the computing system 104 may provide coordination between the material testing machine 102, the robotic manipulator 108, and the test specimen measurement apparatus 132 to select, measure, and test a set of multiple specimens in an automated or semi-automated manner. In other examples, the robot controller 230 may be coupled to each of the material testing machine 102 and the test specimen measurement apparatus 132, and the robot controller 230 may provide the coordination between the material testing machine 102, the robotic manipulator 108, and the test specimen measurement apparatus 132.

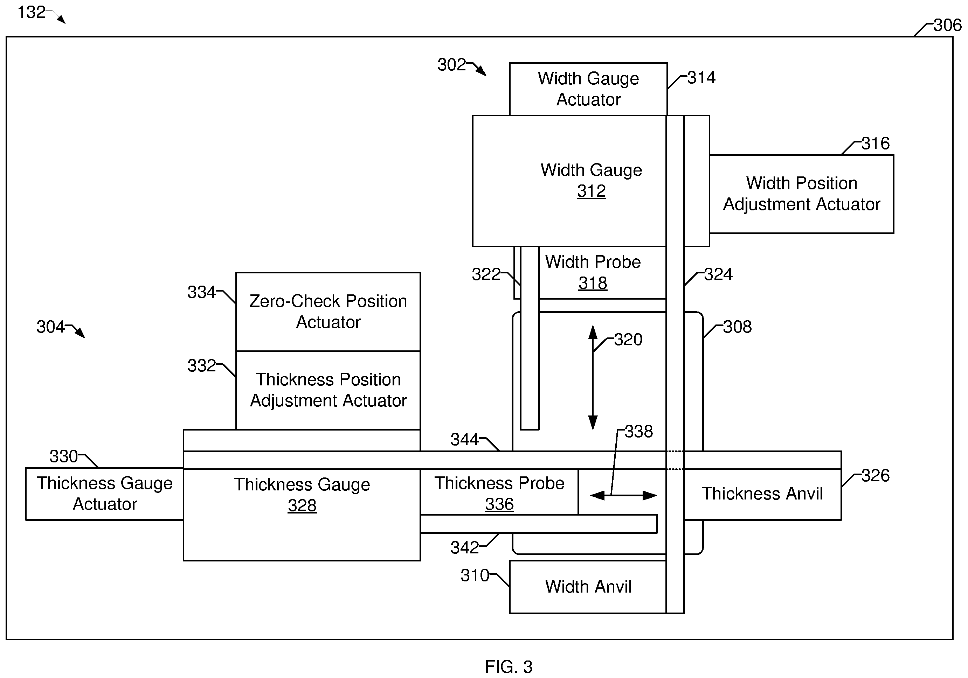

FIG. 3 is a block diagram of an example implementation of the test specimen measurement apparatus 132 of FIG. 1. The test specimen measurement apparatus 132 may be used to automatically perform measurements of dimensions of a specimen, such as a tensile specimen (sometimes referred to as a dog bone test specimen). In the example of FIG. 3, the test specimen measurement apparatus 132 and the robotic manipulator 108 are configured (e.g., programmed) to measure the thickness and gauge width (referred to herein as "width") of a tensile specimen, such as to comply with ASTM D638 standard measurements. However, in other examples, other types or shapes of specimen may be measured via the test specimen measurement apparatus 132.

The example test specimen measurement apparatus 132 of FIG. 3 includes a width measurement assembly 302 and a thickness measurement assembly 304. Each of the width measurement assembly 302 and the thickness measurement assembly 304 are attached to a base 306, such as a plate or other structure. The example base 306 includes a specimen aperture 308, through which the specimen may extend through the base 306. Alternatively, the example width measurement assembly 302 and the example thickness measurement assembly 304 may extend away from the base 306 a sufficient distance to position specimens for measurement without interference by the base 306.

The example width measurement assembly 302 includes a width anvil 310, a width gauge 312, a width gauge actuator 314, and a width position adjustment actuator 316. The example width gauge actuator 314 is coupled to a width probe 318. The width anvil 310 and the width probe 318 are oriented along a first (e.g., width) direction 320, and are aligned along the first direction 320.

The example width gauge 312 is a digital micrometer that measures a linear distance, such as a distance between the width probe 318 and the width anvil 310. The example width gauge 312 includes or is coupled to the width gauge actuator 314. The example width gauge actuator 314 moves the width probe 318 in the first direction 320 (e.g., toward and away from the width anvil 310), while the width gauge 312 monitors changes in the position of the width probe 318. In some examples, a body and measurement circuitry of the width gauge 312 are stationary with respect to the anvil 310, and the width gauge 312 measures movement of the width probe 318 with reference to the body or other reference location in the width gauge 312. In some other examples, the width gauge 312 moves in conjunction with the width probe 318, and the width gauge 312 measures changes in the position of the width probe 318 and/or the width gauge 312 with reference to a stationary reference.

The example width gauge actuator 314 actuates the width probe 318 in the first direction 320. The width probe 318 is coupled to a rail 322, which extends in the first direction 320 and supports the width probe 318 along a travel path.

The width position adjustment actuator 316 is coupled to the width gauge 312 and the width anvil 310, and actuates both the width gauge 312 and the width anvil 310 (including the width gauge actuator 314 and the width probe 318) simultaneously. For example, the width gauge 312 and the width anvil 310 may be attached to a carriage 324 that travels in the first direction 320 to allow simultaneous movement of both the width gauge 312 and the width anvil 310. The example carriage 324 may include a second rail and a support structure (e.g., a plate) to support and convey the carriage 324, the width gauge 312, and the width anvil 310. By securing the width gauge 312 and the width anvil 310 to the carriage 324 for simultaneous movement, the width position adjustment actuator 316 can adjust the positions of the width gauge 312 and the width anvil 310 for different nominal specimen sizes without requiring a zero-check operation to be performed.

The width gauge actuator 314 and the width position adjustment actuator 316 may be a pneumatic actuator, an electromechanical actuator, a hydraulic actuator, and/or any other type of actuator or combination of actuators.

The example thickness measurement assembly 304 includes a thickness anvil 326, a thickness gauge 328, a thickness gauge actuator 330, a thickness position adjustment actuator 332, and a zero-check position actuator 334. The example thickness gauge actuator 330 is coupled to a thickness probe 336. The thickness anvil 326 and the thickness probe 336 are oriented along a second (e.g., thickness) direction 338, and are aligned along the second direction 338.

Like the width gauge 312, the example thickness gauge 328 is a digital micrometer that measures a linear distance, such as a distance between the thickness probe 336 and the thickness anvil 326. The example thickness gauge 328 includes or is coupled to the thickness gauge actuator 330. The example thickness gauge actuator 330 moves the thickness probe 336 in the second direction 338 (e.g., toward and away from the thickness anvil 326), while the thickness gauge 328 monitors changes in the position of the thickness probe 336. In some examples, a body and measurement circuitry of the thickness gauge 328 are stationary with respect to the thickness anvil 326, and the thickness gauge 328 measures movement of the thickness probe 336 with reference to the body or other reference location in the thickness gauge 328. In some other examples, the thickness gauge 328 moves in conjunction with the thickness probe 336, and the thickness gauge 328 measures changes in the position of the thickness probe 336 and/or the thickness gauge 328 with reference to a stationary reference.

The example thickness gauge actuator 330 actuates the thickness probe 336 in the second direction 338. The thickness probe 336 is coupled to a rail 342, which extends in the second direction 338 and supports the thickness probe 336 along a travel path.

The thickness position adjustment actuator 332 is coupled to the thickness gauge 328 and the thickness anvil 326, and actuates both the thickness gauge 328 and the thickness anvil 326 (including the thickness gauge actuator 330 and the thickness probe 336) simultaneously. For example, the thickness gauge 328 and the thickness anvil326 may be attached to a carriage 344 that travels in the second direction 338 to allow simultaneous movement of both the thickness gauge 328 and the thickness anvil 326. The example carriage 344 may include a fourth rail and a support structure (e.g., a plate) to support and convey the carriage 344, the thickness gauge 328, and the thickness anvil 326. By securing the thickness gauge 328 and the thickness anvil 326 to the carriage 344 for simultaneous movement, the thickness position adjustment actuator 332 can adjust the positions of the thickness gauge 328 and the thickness anvil 326 for different nominal specimen sizes without requiring a zero-check operation to be performed.

The width gauge actuator 314 may be controlled to perform a zero-check of the width measurement assembly 302. For example, the width gauge actuator 314 actuates the width probe 318 toward the width anvil 310 until the width probe 318 contacts the width anvil 310. The contact may be detected by, for example, detecting an increased load on the width gauge actuator 314, detecting the closing of an electrical circuit by contact between the width probe 318 and the width anvil 310, visually using an optical sensor, and/or using any other technique for contact detection. When contact is detected, the output of the width gauge 312 may be set to zero or otherwise set as a reference measurement of the width gauge 312.

Similarly, the thickness gauge actuator 330 may be controlled to perform a zero-check of the thickness measurement assembly 304. For example, the thickness gauge actuator 330 actuates the thickness probe 336 toward the thickness anvil 326 until the thickness probe 336 contacts the thickness anvil 326. The contact may be detected in a same, similar, or different manner as described above with reference to zero-checking of the width measurement assembly 302. When contact is detected, the output of the thickness gauge 328 may be set to zero or otherwise set as a reference measurement of the thickness gauge 328.

In the example of FIG. 3, the zero-check position actuator 334 extends the range of the thickness position adjustment actuator 332 to allow the width measurement assembly 302 to perform a zero-check without obstruction by the thickness measurement assembly 304. For example, the thickness anvil 326 may be positioned to obstruct the path between the width probe 318 and the width anvil 310 for some specimens. To perform the zero-check of the width measurement assembly 302, the thickness gauge actuator 330, the thickness position adjustment actuator 332, and/or the zero-check position actuator 334 actuate the thickness probe 336 and/or the thickness anvil326 (e.g., via the rail 342 and/or the carriage 344) out of the travel path of the width probe 318. The example width gauge actuator 314 may then actuate the width probe 318 toward and into contact with the width anvil 310.

The thickness gauge actuator 330, the thickness position adjustment actuator 332, and the zero-check position actuator 334 may be a pneumatic actuator, an electromechanical actuator, a hydraulic actuator, and/or any other type of actuator or combination of actuators. While the thickness measurement assembly 304 includes the zero-check position actuator 334 in the example of FIG. 3, in other examples the thickness position adjustment actuator 332 has a sufficiently large travel range to move the thickness anvil 326 out of the path of the width probe 318 without the zero-check position actuator 334. In some other examples, the width measurement assembly 302 includes a same or similar zero-check position actuator.

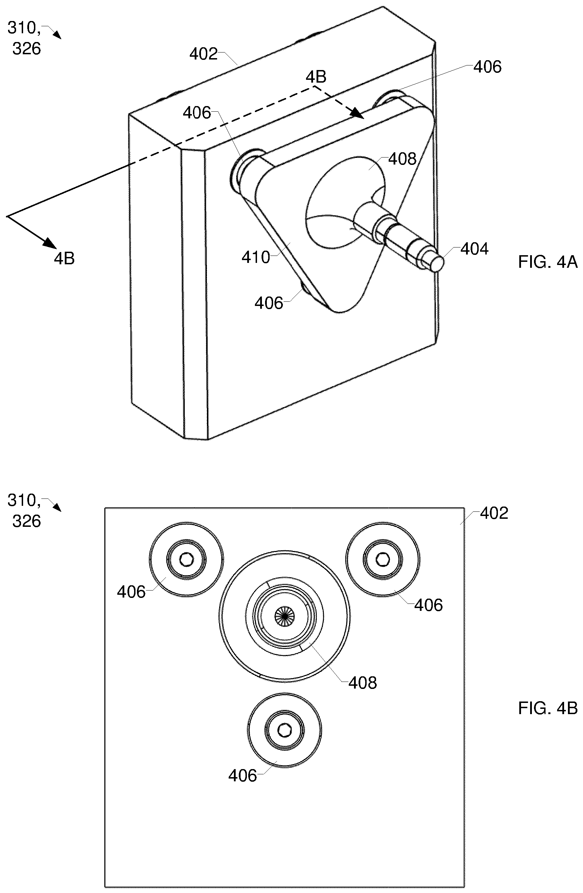

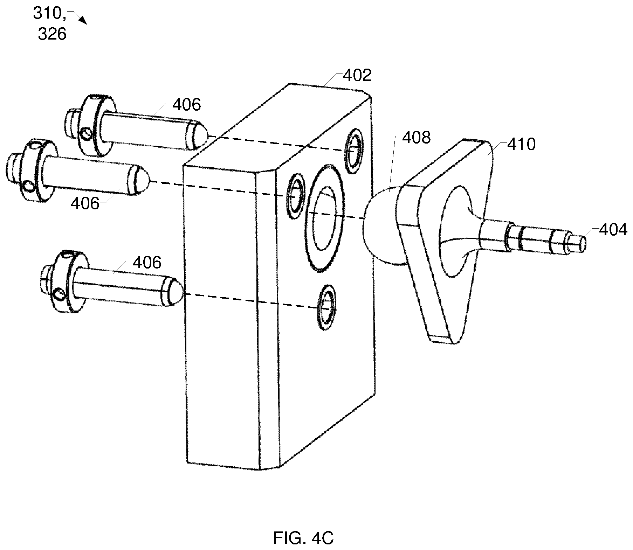

To satisfy parallelism requirements of ASTM D638, the width anvil 310 and the width probe 318 are required to be within a specified parallelism threshold, and the thickness anvil 326 and the thickness probe 336 are required to be within a specified parallelism threshold. FIG. 4A is a perspective view of an example anvil 400 that may be used to implement the thickness anvil 326 and/or the width anvil 310 of FIG. 3. FIG. 4B is a rear elevation view of the example anvil 400 of FIG. 4A, and 4C is an exploded view of the example anvil 400.

The example anvil400 includes a body 402, a probe 404, and adjustment screws 406. The body 402 may be attached to the carriage 324, 344 of FIG. 3 to allow for movement of the anvil 400 with respect to the base 306.

The probe 404 is coupled to a body 402 via ball joint 408, which allows the probe 404 to be rotated with respect to the body 402 and, thus, with respect to the width probe 318 or the thickness probe 336. An adjustment plate 410 is rigidly coupled to the probe 404.

The body 402 includes bores through which the adjustment screws 406 extend from a rear of the body 402 to the front of the body 402, at which the adjustment screws 406 contact a rear surface of the adjustment plate 410. In some examples, the adjustment screws 406 include a ball and spring contact point, at which the adjustment screws 406 contact the adjustment plate 410. The spring biases the ball into contact with the adjustment plate 410, while adjustment of the adjustment screw 406 may adjust the amount of pressure applied by the ball to the adjustment plate 410. By adjusting the adjustment screws 406, the forces applied by the adjustment screws 406 may be adjusted to direct the probe 404 in the desired direction to comply with the parallelism requirements.

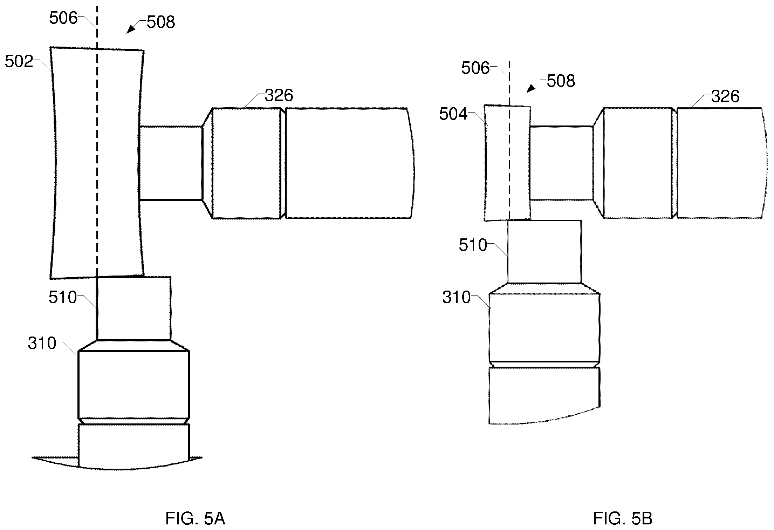

The example test specimen measurement apparatus 132 may automatically adjust the positions of the anvils 310, 326 based on a nominal size of the specimen to be measured. FIG. 5A illustrates a first example test specimen 502 positioned against the example thickness anvil 326 and the example width anvil 310 for measurement of the dimensions of the test specimen 502. FIG. 5B illustrates a second example test specimen 504 positioned against the example thickness anvil 326 and the example width anvil 310 for measurement of the dimensions of the test specimen 504. To adjust the positions of the anvils 310, 326, the example processing circuitry 224 of the computing system 104 may control the width position adjustment actuator 316 and the thickness position adjustment actuator 332 to actuate the anvils 310, 326 to a location corresponding to the specimen to be measured. For example, a specimen to be measured may be identified via an automated input (e.g., a barcode scanner, an RFID tag, an optical input, etc.) and correlated to a nominal dimension. In the example of FIGS. 5A and 5B, the specimen 502 has a first, larger dimension and the specimen 502 has a second, smaller dimension.

In the example of FIGS. 5A and 5B, the width anvil 310 is positioned such that an edge of the width anvil 310 contacts the approximate thickness centerline 506 of the specimen 502, 504. Because certain types of molding is subject to a taper across the thickness of the molded specimen, the width anvil 310 is positioned to contact a side 508 of the thickness centerline having a smaller width. To this end, the contact surface of the thickness anvil 326 is positioned approximately half of the nominal thickness of the specimen 502, 504 from a far edge 510 of the width anvil 310.

When the anvils 310, 326 have been positioned, the specimen 502, 504 is placed (e.g., by the robotic manipulator 108, manually) into contact with the anvils 310, 326 for measurement by the width measurement assembly 302 and the thickness measurement assembly 304.

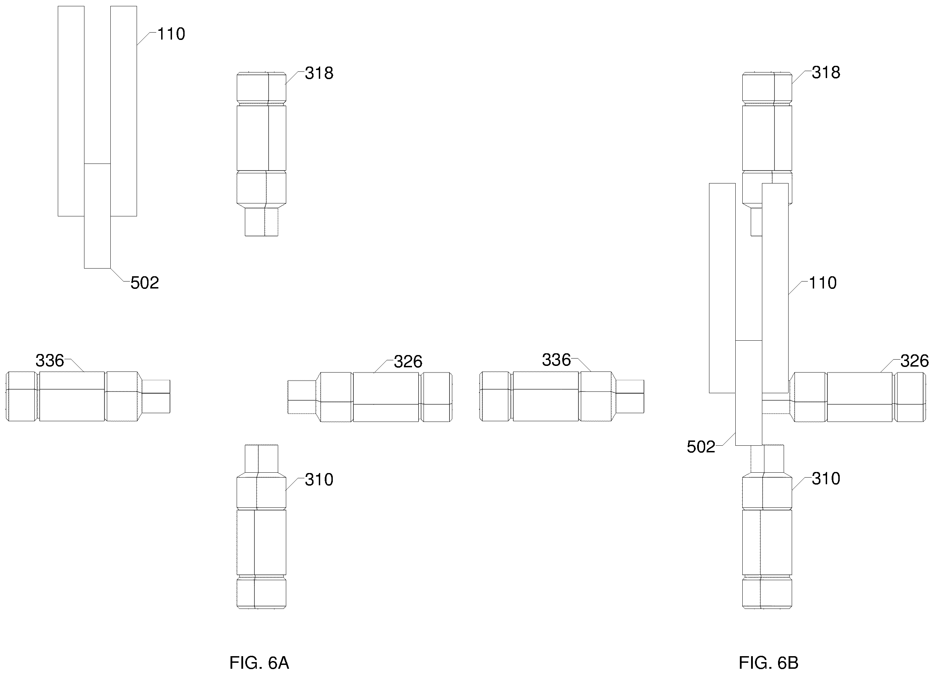

FIGS. 6A-6D illustrates an example sequence of an automatic test specimen measurement involving the test specimen measurement apparatus 132 of FIG. 3 and the robotic manipulator 108 of FIG. 1.

In the example of FIG. 6A, the anvils 310, 326 are positioned according to the nominal dimensions of the specimen 502. The end effector 110 of the robotic manipulator 108 has the specimen 502, and may be moving the specimen 502 toward a programmed position in contact with the anvils 310, 326.

In the example of FIG. 6B, the robotic manipulator 108 has positioned the specimen in contact with the anvils 310, 326, and the end effector 110 continues to hold the specimen 502 in place.

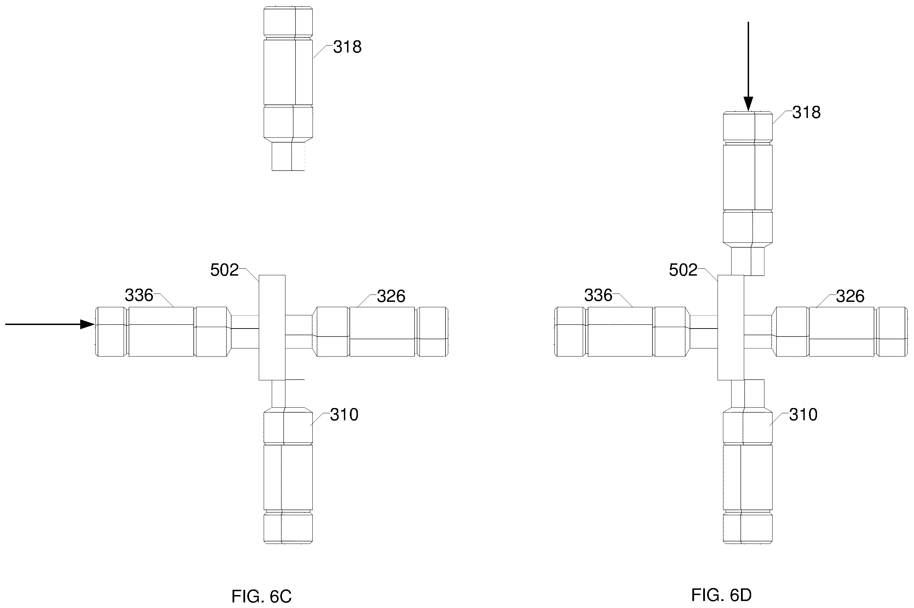

In the example of FIG. 6C, the processing circuitry 224 controls the thickness gauge actuator 330 to actuate the thickness probe 336 toward the thickness anvil 326 (e.g., in the second direction 338) until sufficient contact or pressure is detected between the thickness probe 336 and the specimen 502. When the thickness probe 336 contacts or pressures the specimen 502, the processing circuitry 224 may control the example robotic manipulator 108 to disengage from the specimen 502, which is held in place by the thickness probe 336 and the thickness anvil 326.

In the example of FIG. 6D, the processing circuitry 224 controls the width gauge actuator 314 to actuate the width probe 318 toward the width anvil 310 (e.g., in the first direction 320) until sufficient contact or pressure is detected between the width probe 318 and the specimen 502. The processing circuitry 224 receives the measurements from the width gauge 312 and the thickness gauge 328. In some examples, the processing circuitry 224 may control one or both of the width measurement assembly 302 and the thickness measurement assembly 304 to perform multiple actuations and/or measurements at the same height on specimen 502. Additionally or alternatively, after measuring the width and the thickness of the specimen 502 at a first height (e.g., a first position over a length of the specimen), the example processing circuitry 224 controls the robotic manipulator 108 to adjust the height of the specimen 502 to a different height with respect to the anvils 310, 326, and perform additional width and thickness measurements in the same manner as described above. The width measurements at multiple heights may be used to determine an average width and/or the thickness measurements at multiple heights may be used to determine an average thickness.

The processing circuitry 224 may use the measured width (e.g., average width) and/or the measured thickness (e.g., average thickness) of the specimen 502 to calculate a tensile strength of the specimen 502 following a tensile strength test to determine an ultimate strength or yield strength of the specimen 502.

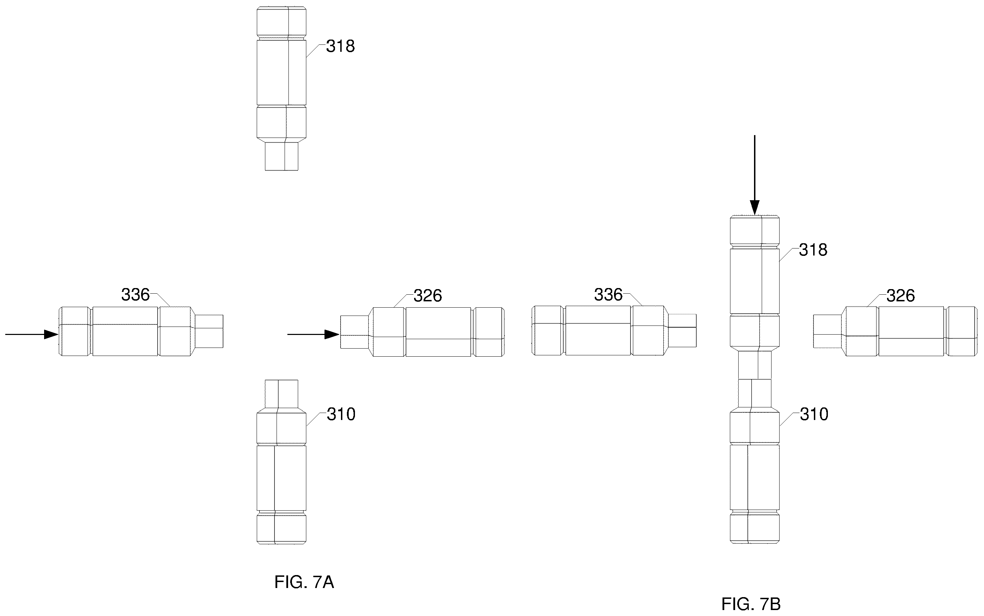

FIGS. 7A-7B illustrates an example sequence of performing a zero-check on the test specimen measurement apparatus 132 of FIG. 3. As illustrated in FIG. 7A, to perform the zero-check on the width measurement assembly 302, the processing circuitry 224 controls the example thickness position adjustment actuator 332 and/or the zero-check position actuator 334 to move the thickness anvil 326 and the thickness gauge 328 simultaneously in the second direction 338 to move the thickness anvil 326 out of a path of travel of the width probe 318. As illustrated in FIG. 7B, the processing circuitry 224 then controls the example width gauge actuator 314 to actuate the width probe 318 in the first direction 320 toward and into contact with the width anvil 310. When the width probe 318 is in contact with the width anvil 310, the processing circuitry 224 may determine the output of the width gauge 312 to be a zero distance or other reference distance. As the width probe 318 is moved away from the width anvil 310, the processing circuitry 224 may then determine a distance between the width probe 318 and the width anvil 310 as an absolute distance with respect to the zero distance.

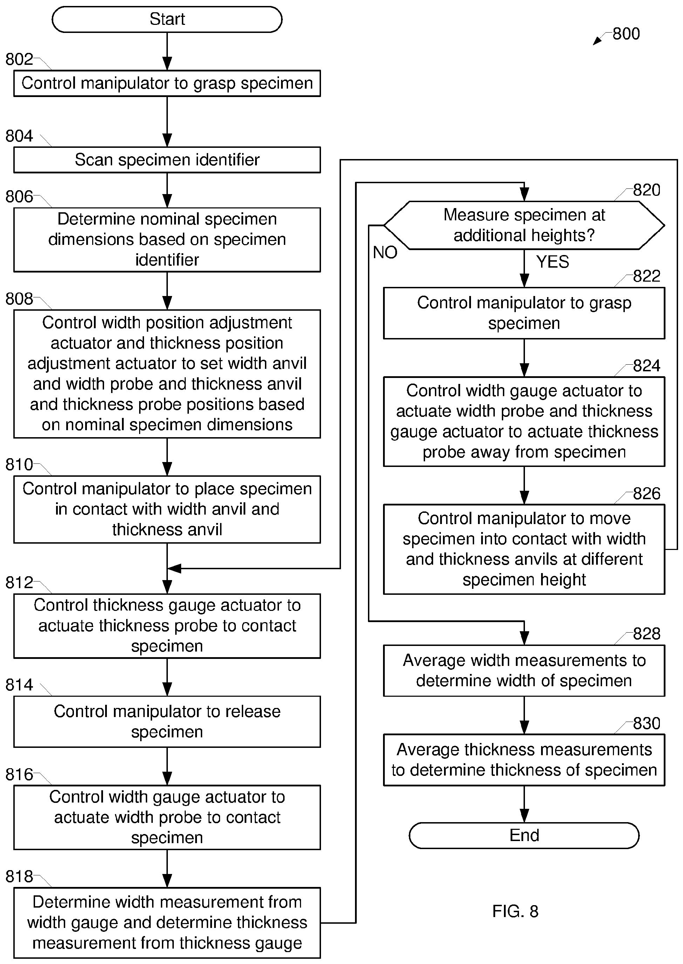

FIG. 8 is a flowchart representative of example machine readable instructions 800 which may be performed by the robot controller 230 of FIG. 2 and/or the computing system 104 of FIGS. 1 and 2 to perform an automated test measurement using the test specimen measurement apparatus 132 of FIG. 3. In the example below, the instructions 800 are described with reference to the processing circuitry 224 of the computing system 104. However, as mentioned above, in other examples the robot controller 230 may implement the instructions 800 to coordinate an automated specimen measurement and testing process.

At block 802, the processing circuitry 224 (e.g., via the robot controller 230) controls the robotic manipulator 108 to grasp a specimen. For example, the manipulator 108 may grasp one of multiple specimens 128 in a rack 130 of specimens.

At block 804, the processing circuitry 224 (e.g., via the I/O interface(s) 222) controls a scanner to scan a specimen identifier. For example, the specimen 128 may be provided with a barcode, RFID tag, or any other machine-readable indicia identifying the specimen (e.g., uniquely identifying via a serial number, identifying a predetermined specimen type corresponding to a set of properties including dimensions, etc.). In some other examples, the specimen identifier may be manually entered or read from a table of predetermined identifiers.

At block 806, the processing circuitry 224 determines nominal specimen dimensions based on the specimen identifier. In some examples, the nominal specimen dimensions are selected from a predetermined set of specimen dimensions. In other examples, the nominal specimen dimensions are specified in associated with the specimen identifier.

At block 808, the processing circuitry 224 controls the width position adjustment actuator 316 and the thickness position adjustment actuator 332 to set the positions of the width anvil 310 and the width probe 318, and the thickness anvil 326 and the thickness probe 336, based on the nominal specimen dimensions.

At block 810, the processing circuitry 224 controls the robotic manipulator 108 to place the specimen 128 in contact with the width anvil 310 and the thickness anvil 326.

At block 812, the processing circuitry 224 controls the thickness gauge actuator 330 to actuate the thickness probe 336 in the second direction 338 to contact the specimen 128. For example, the thickness gauge actuator 330 may actuate the thickness probe 336 with an amount of force that causes less than a threshold deflection in the specimen, and/or the processing circuitry 224 may monitor a force feedback on the thickness gauge actuator 330 and control the thickness gauge actuator 330 to stop actuating when a threshold force is reached.

At block 814, the processing circuitry 224 controls the manipulator 108 to release the specimen 128. The specimen 128 is held in place by the force of the thickness probe 336 and the thickness anvil 326 on the specimen 128.

At block 816, the processing circuitry 224 controls the width gauge actuator 314 to actuate the width probe 318 in the first direction 320 to contact the specimen 128. The processing circuitry 224 may control the width gauge actuator 314 in a similar or identical manner as control of the thickness gauge actuator 330 described above with reference to block 812.

At block 818, the processing circuitry 224 determines a width measurement from the width gauge 312 and determines a thickness measurement from the thickness gauge 328. For example, the processing circuitry 224 may receive the measurements from the width gauge 312 and the thickness gauge 328.

At block 820, the processing circuitry 224 may determine whether to measure the specimen 128 at additional heights (e.g., additional positions along a length of the specimen 128). If the specimen 128 is to be measured at additional heights (block 820), at block 822 the processing circuitry 224 controls the manipulator 108 to grasp the specimen 128. At block 824, the control circuitry 224 controls the width gauge actuator 314 to actuate the width probe 318 away from the specimen 128 and controls the thickness gauge actuator 330 to actuate the thickness probe 336 away from the specimen 128. At block 826, the processing circuitry 224 controls the manipulator 108 to move the specimen 128 into contact with the width anvil 310 and the thickness anvil 326 at a different specimen height. For example, the processing circuitry 224 may be provided with a set of specimen heights for measurement of the specimen 128.

If the specimen 128 is not to be measured at any more additional heights (block 820), at block 828 the processing circuitry 224 averages the width measurement(s) to determine a width of the specimen 128. At block 830, the processing circuitry 224 averages the height measurement(s) to determine a height of the specimen 128. The example instructions 800 then end. In some examples, following the measurement of the specimen 128 via the instructions 800, the specimen 128 may be placed into the material testing machine 102 for performing a physical test, such as a tensile strength test.

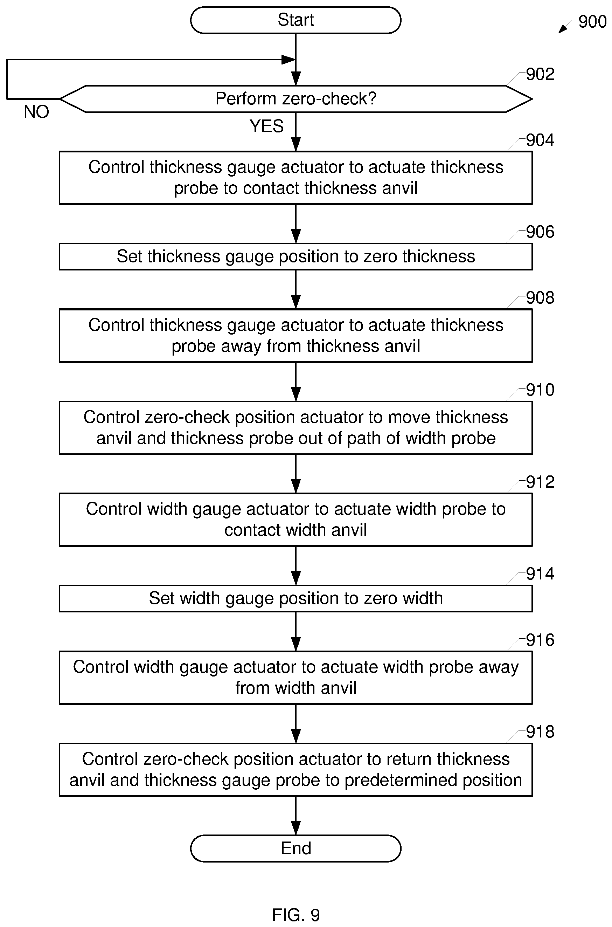

FIG. 9 is a flowchart representative of example machine readable instructions 900 which may be performed by the robot controller 230 of FIG. 2 and/or the computing system 104 of FIGS. 1 and 2 to perform an automated test measurement using the test specimen measurement apparatus 132 of FIG. 3. In the example below, the instructions 900 are described with reference to the processing circuitry 224 of the computing system 104. However, as mentioned above, in other examples the robot controller 230 may implement the instructions 900 to coordinate an automated specimen measurement and testing process.

At block 902, the processing circuitry 224 determines whether to perform a zero-check. For example, the processing circuitry 224 may determine that a zero-check is to be performed periodically, aperiodically, in response to predetermined events (e.g., collisions, movements, adjustments, etc.), and/or at any other time(s). If a zero-check is not to be performed (block 902), control returns to block 902 to await a zero-check trigger.

If a zero-check is to be performed (block 902), at block 904 the processing circuitry 224 controls the thickness gauge actuator 330 to actuate the thickness probe 336 to contact the thickness anvil 326. The processing circuitry 224 may detect contact between the thickness probe 336 and the thickness anvil 326 in a same, similar, or identical manner as described above with reference to detecting contact with the specimen 128 in block 812.

At block 906, the processing circuitry 224 sets a thickness gauge position to a zero-thickness reference. For example, the processing circuitry 224 may receive a measurement signal from the thickness gauge 328 and determine the measurement signal to be equivalent to a position of zero distance between the thickness probe 336 and the thickness anvil 326.

At block 908, the processing circuitry 224 controls the thickness gauge actuator 330 to actuate the thickness probe 336 away from the thickness anvil 326.

At block 910, the processing circuitry 224 controls the zero-check position actuator 334 to move the thickness anvil 326 and the thickness probe 336 out of a path of the width probe 318. For example, the zero-check position actuator 334 may actuate the thickness anvil 326 and the thickness probe 336 simultaneously via the carriage 344.

At block 912, the processing circuitry 224 controls the width gauge actuator 314 to actuate the width probe 318 to contact the width anvil 310. The processing circuitry 224 may detect contact between the width probe 318 and the width anvil 310 in a same, similar, or identical manner as described above with reference to detecting contact with the specimen 128 in block 812.

At block 914, the processing circuitry 224 sets a width gauge position to a zero width reference. For example, the processing circuitry 224 may receive a measurement signal from the width gauge 312 and determine the measurement signal to be equivalent to a position of zero distance between the width probe 318 and the width anvil 310.

At block 916, the processing circuitry 224 controls the width gauge actuator 314 to actuate the width probe 318 away from the width anvil 310.

At block 918, the processing circuitry 224 controls the zero-check position actuator 334 to move the thickness anvil 326 and the thickness probe 336 to a predetermined position. The example instructions 900 then end.

While the disclosed examples are described with reference to an automated test system in which steps of the testing, measurement, and handling processes are automated, in other examples any of the automated testing, measurement, and/or handling processes may be substituted and/or augmented with manual steps. As such, disclosed automated specimen measurement apparatus may be used with manual placement of the specimens, manual reading of the width and/or thickness measurements, manual initiation of zero-checking, and/or other manual triggers. In such examples, other aspects of the automated specimen measurement apparatus continue to be performed automatically.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made, and/or equivalents may be substituted, without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A test specimen measurement apparatus, comprising:
   a first measurement assembly configured to measure a first specimen dimension in a first direction, the first measurement assembly comprising:
      a first anvil oriented along the first direction;
      a first probe oriented along the first direction and configured to move along the first direction toward the first anvil;
      a first micrometer configured to output a first measurement based on a distance between the first probe and the first anvil;
      a first actuator configured to actuate the first micrometer with respect to the first anvil; and
      a second actuator configured to actuate the first micrometer and the first anvil simultaneously along the first direction; and
   a second measurement assembly configured to measure a second specimen dimension in a second direction, the second measurement assembly comprising:
      a second anvil oriented along the second direction;
      a second probe oriented along the second dimension and configured to move along the second direction toward the second anvil;
      a second micrometer configured to output a second measurement based on a distance between the second micrometer and the second anvil; and
      a third actuator configured to actuate the second micrometer with respect to the second anvil.
Clause 2. The test specimen measurement apparatus as defined in clause 1, wherein the first automatic measurement assembly comprises:
   a first rail configured to convey the first micrometer along the first direction; and
   a second rail configured to simultaneously convey the first micrometer and the first anvil along the first direction.
Clause 3. The test specimen measurement apparatus as defined in clause 2, wherein the second automatic measurement assembly comprises:
   a third rail configured to convey the second micrometer along the second direction.
Clause 4. The test specimen measurement apparatus as defined in clause 3, further comprising a fourth actuator configured to actuate the second micrometer and the second anvil simultaneously along the second direction to a first actuator position and a second actuator position.
Clause 5. The test specimen measurement apparatus as defined in clause 4, further comprising a fifth actuator configured to actuate the second micrometer and the second anvil simultaneously along the second direction to a third actuator position from the second actuator position, the third actuator position configured to move at least one of second micrometer or the second anvil out of a path between the first micrometer and the first anvil.
Clause 6. The test specimen measurement apparatus as defined in clause 1, further comprising a base having an aperture through which the specimen extends, the first automatic measurement assembly and the second automatic measurement assembly being coupled to the base.
Clause 7. The test specimen measurement apparatus as defined in clause 1, wherein at least one of the first actuator, the second actuator, or the third actuator comprises an electric actuator.
Clause 8. The test specimen measurement apparatus as defined in clause 1, wherein at least one of the first actuator, the second actuator, or the third actuator comprises a pneumatic actuator.
Clause 9. An automatic test specimen measurement system, comprising:
   a first measurement assembly configured to measure a first specimen dimension in a first direction, the first measurement assembly comprising:
      a first anvil oriented along the first direction;
      a first micrometer oriented along the first direction, configured to move along the first direction toward the first anvil, and configured to output a first measurement based on a distance between the first micrometer and the first anvil;
      a first actuator configured to actuate the first micrometer with respect to the first anvil; and
      a second actuator configured to actuate the first micrometer and the first anvil simultaneously along the first direction;
   a second measurement assembly configured to measure a second specimen dimension in a second direction, the second measurement assembly comprising:
      a second anvil oriented along the second direction;
      a second micrometer oriented along the second dimension, configured to move along the second direction toward the second anvil, and configured to output a second measurement based on a distance between the second micrometer and the second anvil; and
   a third actuator configured to actuate the second micrometer with respect to the second anvil; and
   control circuitry configured to:
      control the second actuator to position the first micrometer and the first anvil;
      control the first actuator to actuate the first micrometer to contact a specimen;
      determine a first measurement of a first dimension of the specimen based on a signal from the first micrometer;
      control the second actuator to actuate the second micrometer to contact the specimen; and
      determine a second measurement of a second dimension of the specimen based on a signal from the second micrometer.
Clause 10. The automatic test specimen measurement system as defined in clause 9, wherein the first automatic measurement assembly comprises:
   a first rail configured to convey the first micrometer along the first direction; and
   a second rail configured to simultaneously convey the first micrometer and the first anvil along the first direction.
Clause 11. The automatic test specimen measurement system as defined in clause 10, wherein the second automatic measurement assembly comprises:
   a third rail configured to convey the second micrometer along the second direction.
Clause 12. The automatic test specimen measurement system as defined in clause 9, further comprising a robotic manipulator configured to position the specimen at a predetermined position with respect to the first anvil and the second anvil.
Clause 13. The automatic test specimen measurement system as defined in clause 12, wherein the predetermined position places the specimen in contact with both the first anvil and the second anvil.
Clause 14. The automatic test specimen measurement system as defined in clause 12, wherein the predetermined position is based on one or more nominal dimensions of the specimen.
Clause 15. The automatic test specimen measurement system as defined in clause 14, wherein the control circuitry is configured to control the second actuator to position the first micrometer and the first anvil based on the one or more nominal dimensions of the specimen.
Clause 16. The automatic test specimen measurement system as defined in clause 15, further comprising a fourth actuator configured to actuate the second micrometer and the second anvil simultaneously along the second direction to a first actuator position and a second actuator position, wherein the control circuitry is configured to control the fourth actuator to position the second micrometer and the second anvil based on the one or more nominal dimensions of the specimen.
Clause 17. The automatic test specimen measurement system as defined in clause 12, wherein the robotic manipulator is further configured to, after determination of the first and second measurements of the first and second dimensions of the specimen, move the specimen to a second predetermined position, and the control circuitry is configured to:
   control the first actuator to actuate the first micrometer to contact the specimen;
   determine a third measurement of the first dimension of the specimen based on a signal from the first micrometer;
   control the second actuator to actuate the second micrometer to contact the specimen; and
   determine a fourth measurement of the second dimension of the specimen based on a signal from the second micrometer.
Clause 18. The automatic test specimen measurement system as defined in clause 17, wherein the control circuitry is configured to:
   determine a thickness of the specimen based on the first and third measurements;
   determine a width of the specimen based on the second and fourth measurements.
Clause 19. The automatic test specimen measurement system as defined in clause 12, wherein the predetermined position is based on an identifier of the specimen.
Clause 20. The automatic test specimen measurement system as defined in clause 9, further comprising a material testing system configured to measure a physical property of the specimen, and calculate a physical characteristic of the specimen based on the first measurement, the second measurement, and the measured physical property of the specimen.

## Claims

1. A test specimen measurement apparatus, comprising:
a first measurement assembly configured to measure a first specimen dimension in a first direction, the first measurement assembly comprising:
a first anvil oriented along the first direction;
a first probe oriented along the first direction and configured to move along the first direction toward the first anvil;
a first micrometer configured to output a first measurement based on a distance between the first probe and the first anvil;
a first actuator configured to actuate the first micrometer with respect to the first anvil; and
a second actuator configured to actuate the first micrometer and the first anvil simultaneously along the first direction; and
a second measurement assembly configured to measure a second specimen dimension in a second direction, the second measurement assembly comprising:
a second anvil oriented along the second direction;
a second probe oriented along the second dimension and configured to move along the second direction toward the second anvil;
a second micrometer configured to output a second measurement based on a distance between the second micrometer and the second anvil; and
a third actuator configured to actuate the second micrometer with respect to the second anvil.

2. The test specimen measurement apparatus as defined in claim 1, wherein the first automatic measurement assembly comprises:
a first rail configured to convey the first micrometer along the first direction; and
a second rail configured to simultaneously convey the first micrometer and the first anvil along the first direction.

3. The test specimen measurement apparatus as defined in claim 2, wherein the second automatic measurement assembly comprises:
a third rail configured to convey the second micrometer along the second direction.

4. The test specimen measurement apparatus as defined in any one of claims 1 to 3, further comprising a fourth actuator configured to actuate the second micrometer and the second anvil simultaneously along the second direction to a first actuator position and a second actuator position, and optionally
wherein the test specimen measurement apparatus further comprises a fifth actuator configured to actuate the second micrometer and the second anvil simultaneously along the second direction to a third actuator position from the second actuator position, the third actuator position configured to move at least one of second micrometer or the second anvil out of a path between the first micrometer and the first anvil.

5. The test specimen measurement apparatus as defined in any one of claims 1 to 4, further comprising a base having an aperture through which the specimen extends, the first automatic measurement assembly and the second automatic measurement assembly being coupled to the base.

6. The test specimen measurement apparatus as defined in any one of claims 1 to 5, wherein at least one of the first actuator, the second actuator, or the third actuator comprises an electric actuator, and/or
wherein at least one of the first actuator, the second actuator, or the third actuator comprises a pneumatic actuator.

7. An automatic test specimen measurement system, comprising:
a first measurement assembly configured to measure a first specimen dimension in a first direction, the first measurement assembly comprising:
a first anvil oriented along the first direction;
a first micrometer oriented along the first direction, configured to move along the first direction toward the first anvil, and configured to output a first measurement based on a distance between the first micrometer and the first anvil;
a first actuator configured to actuate the first micrometer with respect to the first anvil; and
a second actuator configured to actuate the first micrometer and the first anvil simultaneously along the first direction;
a second measurement assembly configured to measure a second specimen dimension in a second direction, the second measurement assembly comprising:
a second anvil oriented along the second direction;
a second micrometer oriented along the second dimension, configured to move along the second direction toward the second anvil, and configured to output a second measurement based on a distance between the second micrometer and the second anvil; and
a third actuator configured to actuate the second micrometer with respect to the second anvil; and
control circuitry configured to:
control the second actuator to position the first micrometer and the first anvil;
control the first actuator to actuate the first micrometer to contact a specimen;
determine a first measurement of a first dimension of the specimen based on a signal from the first micrometer;
control the second actuator to actuate the second micrometer to contact the specimen; and
determine a second measurement of a second dimension of the specimen based on a signal from the second micrometer.

8. The automatic test specimen measurement system as defined in claim 7, wherein the first automatic measurement assembly comprises:
a first rail configured to convey the first micrometer along the first direction; and
a second rail configured to simultaneously convey the first micrometer and the first anvil along the first direction, and optionally
wherein the second automatic measurement assembly comprises:
a third rail configured to convey the second micrometer along the second direction.

9. The automatic test specimen measurement system as defined in claim 7 or claim 8, further comprising a robotic manipulator configured to position the specimen at a predetermined position with respect to the first anvil and the second anvil.

10. The automatic test specimen measurement system as defined in claim 9, wherein the predetermined position places the specimen in contact with both the first anvil and the second anvil.

11. The automatic test specimen measurement system as defined in claim 9 or claim 10, wherein the predetermined position is based on one or more nominal dimensions of the specimen.

12. The automatic test specimen measurement system as defined in claim 11, wherein the control circuitry is configured to control the second actuator to position the first micrometer and the first anvil based on the one or more nominal dimensions of the specimen, and optionally
wherein the automatic test specimen measurement system further comprises a fourth actuator configured to actuate the second micrometer and the second anvil simultaneously along the second direction to a first actuator position and a second actuator position, wherein the control circuitry is configured to control the fourth actuator to position the second micrometer and the second anvil based on the one or more nominal dimensions of the specimen.

13. The automatic test specimen measurement system as defined in any one of claims 9 to 12, wherein the robotic manipulator is further configured to, after determination of the first and second measurements of the first and second dimensions of the specimen, move the specimen to a second predetermined position, and the control circuitry is configured to:
control the first actuator to actuate the first micrometer to contact the specimen;
determine a third measurement of the first dimension of the specimen based on a signal from the first micrometer;
control the second actuator to actuate the second micrometer to contact the specimen; and
determine a fourth measurement of the second dimension of the specimen based on a signal from the second micrometer, and optionally
wherein the control circuitry is configured to:
determine a thickness of the specimen based on the first and third measurements;
determine a width of the specimen based on the second and fourth measurements.

14. The automatic test specimen measurement system as defined in any one of claims 9 to 13, wherein the predetermined position is based on an identifier of the specimen.

15. The automatic test specimen measurement system as defined in any one of claims 7 to 14, further comprising a material testing system configured to measure a physical property of the specimen, and calculate a physical characteristic of the specimen based on the first measurement, the second measurement, and the measured physical property of the specimen.
